Europäisches Patentamt

(19) European Patent Office

Office européen des brevets

(11) Numéro de publication: **0 208 620**
**B1**

(12) ## FASCICULE DE BREVET EUROPEEN

(45) Date de publication du fascicule du brevet: **11.04.90**

(21) Numéro de dépôt: **86401525.0**

(22) Date de dépôt: **09.07.86**

(51) Int. Cl.⁵: **F 27 B 9/02, F 27 B 9/30,** F 27 B 9/26, F 27 D 5/00, F 26 B 25/18

(54) **Perfectionnement aux installations de séchage et de cuisson de produits céramiques.**

(30) Priorité: **12.07.85 FR 8510712**

(43) Date de publication de la demande: **14.01.87 Bulletin 87/03**

(45) Mention de la délivrance du brevet: **11.04.90 Bulletin 90/15**

(84) Etats contractants désignés: **AT BE CH DE FR GB IT LI LU NL SE**

(56) Documents cités: **DE-A-2 737 549** **DE-A-3 338 415** **DE-C- 304 016** **DE-C- 902 234** **FR-A- 356 838** **FR-A-2 118 404**

(73) Titulaire: **Société d'Etudes et de Constructions Electriques et Mécaniques SECEM** **4, rue Richepanse** **F-75001 Paris (FR)**

(72) Inventeur: **Hartmann, Michel** **Hameau de la Forêt Challonvillars** **F-70400 Hericourt (FR)**

(74) Mandataire: **Loyer, Bertrand et al** **Cabinet Pierre Loyer 77, rue Boissière** **F-75116 Paris (FR)**

Courier Press, Leamington Spa, England.

EP 0 208 620 B1

## Description

La fabrication de produits céramiques tels que tuiles, briques ou autres se fait généralement par formage et pressage d'argile, cette opération donnant des produits crus ou verts, malléables et déformables, qui subissent une opération de séchage dans des conditions de manutention et sur supports conçus pour éviter la déformation. A la suite de ce séchage, les produits, devenus relativement rigides sont envoyés à la cuisson dans des conditions de manutention et de supports conçus pour permettre un empilage dense.

Dans cette technologie, les séchoirs sont conçus pour utiliser des masses d'air considérables enveloppant des produits relativement dispersés, ce qui autorise un fort débit d'air par kg d'eau évacué, avec une température d'extraction basse (35°C environ), tandis que les fours de cuisson sont conçus pour opérer sur des produits très entassés, sur supports collectifs, avec des débits d'air aussi faibles que possible mais des conditions d'étanchéité sévères pour améliorer le bilan thermique.

A cet effet, il a déjà été proposé par le brevet allemand n° 27 37 549 d'utiliser des fours présentant des rigoles longitudinales le long des parois latérales dans lesquelles sont en partie immergées des lames que présentent des wagons de manutention des produits. Une autre méthode permettant d'assurer une étanchéité parfaite dans un four de cuisson consiste à faire circuler des wagons munis d'une jupe périphérique dans une fosse inférieure remplie d'eau. C'est cette seconde méthode qui est la plus souvent utilisée à l'heure actuelle car elle donne de meilleurs résultats.

Les différences de structure et de condition de fonctionnement imposent des supports différents pour le séchage et la cuisson: supports individuels au séchage, conçus pour éviter les déformations, mais n'ayant à supporter que de basses températures, donc réalisés en matériau peu coûteux (bois, matière plastique); et supports collectifs des produits secs pour une utilisation maximale du volume du four, ces supports devant être réalisés en matériaux résistant aux hautes températures et supporte les descentes de charge à la température de cuisson, ce qui les rend coûteux. Une manutention de transfert d'un type de support à l'autre, d'un mode d'empilage à l'autre est donc nécessaire entre four de séchage et four de cuisson.

Afin de limiter ces manutentions, il a déjà été proposé par le brevet F. 356.838 de réaliser le séchage et la cuisson des matériaux dans un même four.

L'invention a pour objet de proposer une installation permettant de combler les lacunes de l'ait antérieur afin d'augmenter la productivité de l'ensemble tout en diminuant la consommation d'énergie.

L'installation de séchage et de cuisson pour produits céramiques du type à four tunnel continu, comportant un four de séchage (S) muni d'une porte d'entrée (P1) et un four de cuisson (C) muni d'une porte de sortie (P2), dans lequel des wagons, chargés de produits à sécher et à cuire se déplacent à contre-courant d'une circulation d'air de séchage et/ou de cuisson, lesdits wagons étant munis à leur base d'une jupe périphérique, destinée à être immergée sur tout son pourtour dans des fosses inférieures remplies d'eau du four de séchage (S) et du four de cuisson (C) est caractérisée en ce que le four de séchage (S) et le four de cuisson (C) sont séparés l'un de l'autre par une zone intermédiaire (I) étanche, la zone intermédiaire (I) présentant une fosse inférieure formant une fosse continue avec les fosses inférieures du four de séchage (S) et du four de cuisson (C), l'air de séchage est insufflé par des moyens d'introduction à la sortie du four de séchage (S), qui est également l'entrée de la zone intermédiaire (I), et évacué par une cheminée à l'entrée dudit four de séchage (S) tandis que l'air de cuisson est insufflé à la sortie du four de cuisson (C) par des moyens d'introduction et en partie évacué par une cheminée située à l'entrée du four de cuisson (C) qui est aussi la sortie de la zone intermédiaire (I), des moyens de contrôle et de réglage de la pression dans la zone intermédiaire (I) sont prévus afin que la pression à la sortie de la zone intermédiaire (I), qui est la même que celle à l'entrée du four de cuisson (C), soit égale ou supérieure à la pression à l'entrée de la zone intermédiaire (I), qui est la même que celle à la sortie du four de séchage (S), le four de séchage (S) est muni de moyens de recyclage partiel ou total de l'air et de réchauffage de l'air recyclé.

L'invention vise également les dispositions ci-après:

les moyens de recyclage et de réchauffage de l'air comprennent un canal d'aspiration transversal au four, ouvert vers le bas, relié à un ventilateur dont la conduite de refoulement comporte un moyen de chauffage tel qu'un brûleur et débouche dans une rampe parallèle au canal d'aspiration, rampe munie de buses de mise en vitesse;

l'avance des wagons dans l'ensemble four de séchage four de cuisson est une avance pas à pas, le pas étant égal ou sous-multiple entier de la longueur d'un wagon, les produits sont placés dans des supports (ou gazettes) positionnés en piles équidistantes, avec un entre-axe égal ou sous-multiple de la longueur d'un wagon, et les moyens de recyclage d'air avec réchauffage sont répartis de façon telle que l'aspiration et le refoulement se trouvent, à chaque arrêt, situés l'un et l'autre au droit d'un espace séparant deux piles de gazettes, espace dont la longueur est de quelques décimètres;

la longueur de l'enceinte intermédiaire (I) est de l'ordre de grandeur de la longueur d'un wagon;

les produits sont empilés sans contact entre eux sur les wagons au moyen de supports (ou gazettes) céramiques comportant une sole perforée assurant l'appui des produits, ladite sole pouvant être munie de reliefs de calage pour éviter les déformations, et des flancs latéraux perpendiculaires à ladite sole;

la porte de sortie (P2) du four de cuisson (C) est une porte double en forme de sas, la distance entre les deux portes du sas étant supérieure à la longueur d'un wagon.

Les avantages propres à l'invention seront explicités ci-après à la suite de la description d'un exemple de réalisation illustré par le dessin annexé sur lequel:

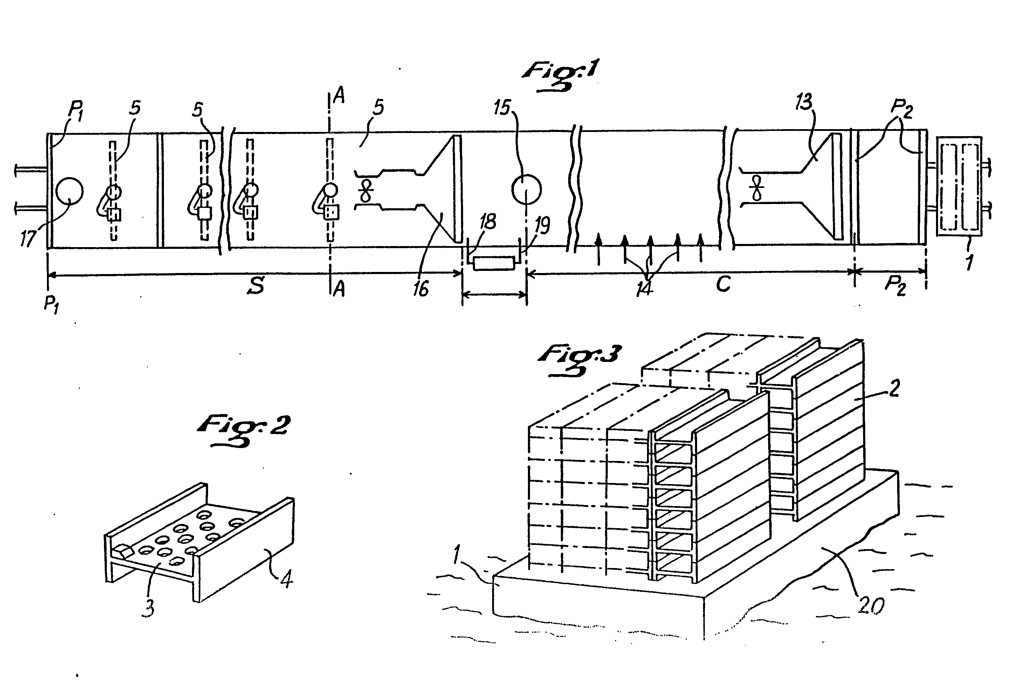

La figure 1 est une vue schématique, en plan, d'un ensemble four de séchage-cuisson, selon l'invention;

La figure 2 est une vue perspective schématique d'une gazette support;

La figure 3 est une vue schématique perspective illustrant l'empilage des produits sur wagons;

La figure 4 est une vue en coupe verticale AA de la figure 1;

La figure 5 est une vue partielle de dessus de l'ensemble de reconditionnement d'air de la figure 4;

La figure 6 illustre une gazette munie de produits;

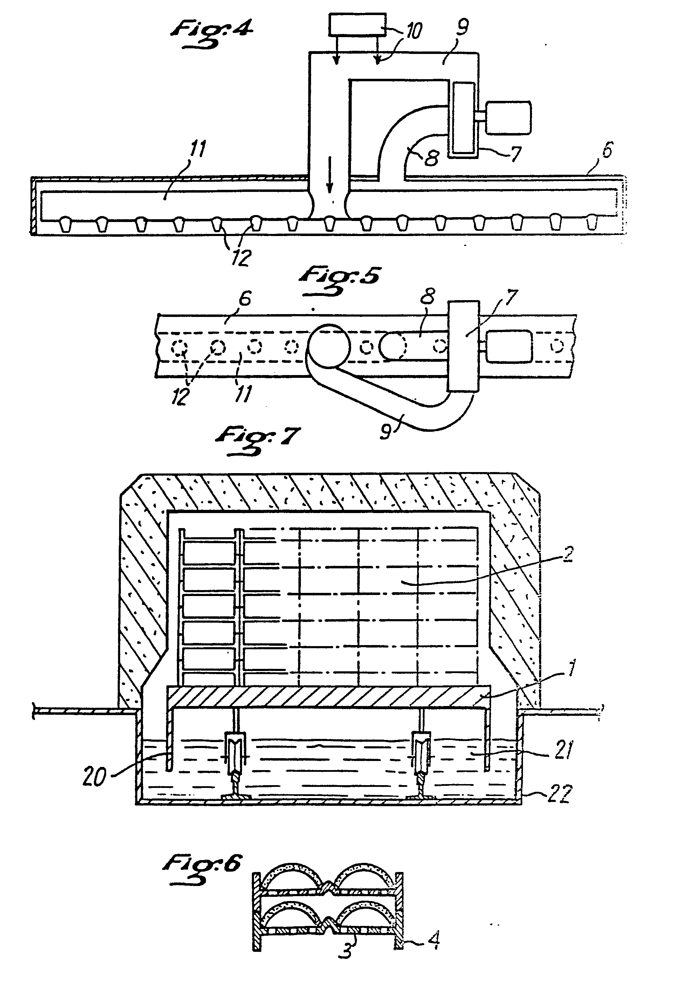

La figure 7 est une coupe schématique du four de séchage selon AA de la figure 1.

En se reportant à ces figures, on voit que dans l'exemple de réalisation représenté, le four de séchage S et le four de cuisson C sont rectilignes et dans le prolongement l'un de l'autre. Cette disposition n'est nullement limitative, mais elle est préférée pour les avantages de construction qu'elle entraîne.

Le four de séchage S comporte une porte P1 que l'on ouvre à chaque entrée de wagon pour la refermer ensuite. Le four de cuisson C comporte une porte de sortie P2 (en l'espèce un sas à deux portes afin d'augmenter l'étanchéité et de réduire les pertes de calories). Mais il n'y a de préférence, pas de porte à la sortie du four de séchage (entrée de l'enceinte intermédiaire I) ni à l'entrée du four de cuisson (sortie de l'enceinte I) et l'espace interne de l'ensemble est de préférence continu.

A l'intérieur de cet ensemble, les produits circulent sur des wagons 1, sur lesquels ils sont disposés en piles 2 par le moyen de gazettes céramiques et l'avance des wagons est une avance pas à par, le pas étant égal ou sousmultiple simple de l'extraxe entre wagons.

Les gazettes comportent une sole perforée (3) assurant l'appui des produits, d'éventuels reliefs de calage (non représentés) pour éviter leur déformation et des flancs latéraux verticaux 4 permettant l'empilage sans contact des produits entre eux et la transmission verticale des charges par les flancs 4.

Ansi, les produits traversent de façon continue le four de séchage et le four de cuisson sans manutention intermédiare et leur empilage est réalisé de façon à satisfaire à la fois les conditions propres aux supports de produits crus ou verts (pas de contact entre produits, moyens propres à éviter la déformation) et les conditions propres aux supports de produits secs et à cuire (résistance aux températures, densité d'empilage, descentes de charges à l'empilage circulation d'air). Pour la mise en oeuvre de cette nouvelle technologie, l'invention prévoir que la four de séchage et le four de cuisson soient d'une très grande étanchéité et que les moyens de cette étanchéité soient les mêmes dans les deux fours, de telle sorte que l'ensemble puisse former une enceinte continue, et que les pressions en chaque zone puissent être rigoureusement contrôlées.

A cet effet, on utilise de préférence les moyens d'étanchéité décrits au brevet français n° 82.022294 déposé le 12 février 1982, publié sous le n° 2 521 704, au nom de Entreprise Hartmann Père & Fils, les fosses inférieures du four de séchage S et du four decuisson C étant reliées par une fosse inférieure prévue dans l'enceinte intermédiare I, de façon à former une fosse inférieure continue 22 sur toute la longueur de l'ensemble, les jupes 20 des wagons restent ainsi continuellement plongées dans la masse liquide 21 de cette fosse qui assure le joint hydraulique.

Néanmoins, une telle disposition a pour conséquence que les produits traversent le four de séchage sous forme d'empilage de forte densité, ce qui risque d'entraîner des condensations et des ruissellements susceptibles de provoquer des déformations ou des altérations des produits crus.

C'est pourquoi l'invention prévoir un reconditionnement de l'air de séchage, reconditionnement réalisé par des ensembles 5 répartis sur la longueur du four S et assurant de l'air, son réchauffage et sa réinjection dans le four.

De préférence, les piles sont disposées sur les wagons de façon à être équidistantes et séparées par un intervalle de quelques décimètres, par exemple 0,30 m à 0,50 m, l'intervalle entre deux piles adjacentes de deux wagons en contact étant identique à l'intervalle entre deux piles d'un même wagon (on peut également prévoir des wagons à une seule pile). Et les ensembles 5 sont situés à des emplacement coïncidant avec la position des espaces entre piles aux arrêts de l'avance pas à pas des wagons.

Un exemple de réalisation d'un ensemble 5 est représenté aux figures 4 et 5, il est formé d'un canal 6, transversal au four, ouvert vers le bas, en forme de gouttière ou auge inversée constituant l'ouverture d'aspiration; le canal 6 est relié au ventilateur 7 par le conduit 8; l'air aspiré par le ventilateur 7 est refoulé par la canalisation 9, comportant des moyens de chauffage 10 ves une rampe 11 munie de buse 12 pour la mise en vitesse de l'air.

Dans l'exemple représenté, la rampe 11 est coaxiale au canal 6, mais elle peut également être parallèle et contiguë, ou encore parallèle et distance du canal 6 d'un intervalle voisin de l'extraxe entre piles 2.

Le four de cuisson C est muni, comme connu, des moyens d'introduction d'air sous pression 13, de moyens d'injection de combustible 14 et d'une cheminée d'évacuation de produits de combustion 15. De son côté, le four de séchage S comporte des moyens d'introduction d'air chaud sous pression 16, et outre les ensembles 5 décrits ci-dessus, une cheminée d'évacuation 17.

Conformément à l'invention, l'énceinte intermédiaire I est munie de capteurs de pression 18, 19, contrôlant la pression de l'air aux extrémités de cette enceinte (à la sortie du four S et à l'entrée du four C) et des moyens, de préférence automatiques, sont prévus pour assurer le réglage de ces pressions. On agira, par exemple, sur l'ouverture de la cheminée 15 et sur le ventilateur de mise en pression à l'introduction d'air 16. Le réglage des pressions en 18 et 19 est tel que la pression en 19 soit égale ou supérieure à la pression en 18. Lorsque les pressions en 18 et 19 sont égales, il n'y a pas de flux d'air entre les fours C et S et l'enceinte I est une zone morte en ce que concerne la circulation d'air. Les produits de combustion du four C ne pénètrent pas dans le four S, et réciproquement, en dépit de l'absence de portes et de la continuité d'espace entre les fours.

Cette disposition est très importante, notamment lorsque les produits de combustion contiennent des sels solubles, résultant de la cuisson, et dont il y a lieu d'éviter qu'ils ne se déposent sur les produits en cours de séchage afin d'éviter les phénomènes d'efflorescence.

Lorsque, par contre, ce danger n'est pas à craindre, l'invention permet d'utiliser une partie prédéterminée des calories des produits de combustion issue de la zone de cuisson pour le séchage, en réglant la pression en 19 à une valeur supérieure à la pression en 18, ce qui conduit à une notable économie d'énergie.

En tout état de cause, la pression en 19 doit rester supérieure à la pression en 18.

L'invention constitue une véritable transformation technologique dont les avantages sont considérables, en dépit de l'augmentation d'investissements et de dépenses dus à l'emploi de gazettes céramiques individuelles ou tout au moins évitant le contact des produits entre eux. En effet, les supports céramiques sont côteux, fragiles et de courte durée. Il était donc normal d'utiliser pour le séchage des supports réalisés en matériaux de faible valeur, tels que bois ou matières plastiques, tandis qu'à la cuisson, les supports, nécessairement céramiques, étaient conçus pour rassembler un groupe ou paquet de produits secs, donc suffisamment rigides pour être entassés ou placés les uns contre les autres, de façon à réduire au minimum la dépense entraînée par les supports.

A l'encontre de ces données, l'installation selon l'invention multiplie les supports céramiques (facteur de multiplication de 10 à 15) et par suite élève les coûts d'installation de renouvellement de supports, et de manutention (puisque la manutention porte sur des supports fragiles beaucoup plus nombreux).

Par contre, dans les unités classiques de séchage et cuisson, la durée du cycle de séchage est de l'ordre de 24 heures et celle du cycle de cuisson est de l'ordre de 48 heures.

Ces durées résultent, en ce qui concerne le séchage, de l'utilisation de grands débits d'air à température d'extraction basse (environ 35°C); et en ce qui concerne le four de cuisson, ces durées résultent de l'utilisation de supports collectifs de produits secs, contenant par exemple 80 kg de produits dans une volume de 130 dm3, mode d'empilage à forte inertie thermique, du fait que le serrage des produits entre eux s'oppose à la circulation de l'air.

La combinaison de l'invention dans laquelle les supports de cuisson ont des caractéristiques de supports de séchage tandis que l'empilage a les caractéristiques d'un empilage de supports de cuisson permet à la fois de supprimer la manutention entre four de séchage et four de cuisson et de réduire les durées des cycles à des valeurs pouvant atteindre 6 heures pour le séchage et 9 heures pour la cuisson.

Cette réduction énorme des cycles est due au fait que le débit d'air au séchage est beaucoup plus faible mais compensé par un réchauffage systématique le long du séchoir, la température de l'air extrait étant plus élevée (60°C), que, pour la cuisson, l'inertie thermique du mode d'empilage est beaucoup plus faible, le volume d'une gazette pouvant être de l'ordre de 7 dm3 pour un poids de 6 kg; que l'utilisation de fours à étanchéité très élevée permet de maîtriser et de relever considérablement les pressions, d'abaisser la quantité d'air nécessaire au traitement des produits.

C'est ainsi que dans un four de cuisson classique, la pression est de l'ordre de 2,5 mm d'eau et la consommation d'air de l'ordre de 3 à 4 tonnes par tonne de produits traités, tandis que l'installation selon l'invention peut fonctionner sous une pression de 100 mm d'eau et consommer 1,5 tonne d'air par tonne de produit.

Les augmentations de productivité, les économies d'énergies ainsi réalisées compensent largement les coûts supplémentaires occasionnés par le stock et la consommation des supports céramiques.

Un autre avantage de l'invention est de réduire considérablement la pollution du fait de la réduction des débits d'air employés.

Enfin, l'invention permet des réalisations jusque là difficiles et notamment la cuisson de produits émaillés et un flammage plus rationnel.

En effet, pour la cuisson de produits émaillés, il est très important d'éviter les contacts entre produits qui provoquent des défauts d'émaillage.

Du fait même que le séchage et la cuisson sont ici réalisés dans manutention intermédiaire et par le moyen d'un empilage sur supports évitant tout contact entre le produits, il devient possible, sans aucune mesure supplémentaire si ce n'est une enduction d'émail après formage des produits, de fabriquer des produits émaillés sans risque d'altération de l'émail.

De même, du fait que les produits sont séparés, il devient . possible, sans disposition spéciale, d'obtenir des effets de flammage ("flashing") beaucoup plus satisfaisants.

L'invention est susceptible de variantes et d'adaptation selon la forme et la nature des produits à sécher et à cuire. Les longueurs respectives des fours, des longueurs de cycles, l'utilisation des produits de combustion au séchage, le nombre de piles par wagon, le nombre de produits par gazette et la forme de ces derniers pourront varier dans chaque cas.

Les gazettes de la figure 2 pourront être conçus comme supports individuels, par exemple dans le cas de tuiles en forme, mais on peut également dessiner les gazettes pour porter plusieurs produits, comme représenté figure 6. La caractéristique essentielle reste que ces produits soient disposés sans contact entre eux, convenablement calés et soutenus sur une sole perforée 3 et que les flances latéraux 4 assurent l'empilage par superposition des gazettes, la descente de charges et la résistance mécanique à l'écrasement.

## Revendications

1. Installation de séchage et de cuisson pour produits céramiques du type à four tunnel continu, comportant un four de séchage (S) muni d'une porte d'entrée (P1) et un four de cuisson (C) muni d'une porte de sortie (P2), dans lequel des wagons, chargés de produits à sécher et à cuire se déplacent à contre-courant d'une circulation d'air de séchage et/ou de cuisson, lesdits wagons étant munis à leur base d'une jupe périphérique, destinée à être immergée sur tout son pourtour dans des fosses inférieures remplies d'eau du four de séchage (S) et du four de cuisson (C), caractérisée en ce que le four de séchage (S) et le four de cuisson (C) sont séparés l'un de l'autre par une zone intermédiaire (I) étanche, la zone intermédiaire (I) présentant une fosse inférieure formant une fosse continue (22) avec les fosses inférieures du four de séchage (S) et du four de cuisson (C), l'air de séchage est insufflé par des moyens d'introduction (16) à la sortie du four de séchage (S), qui est également l'entrée de la zone intermédiaire (I), et évacué par une cheminée (17) à l'entrée dudit four de séchage (S) tandis que l'air de cuisson est insufflé à la sortie du four de cuisson (C) par des moyens d'introduction (13) et en partie évacué par une cheminée 15 située à l'entrée du four de cuisson (C) qui est aussi la sortie de la zone intermédiaire (I), des moyens (18, 19) de contrôle et de réglage de la pression dans la zone intermédiaire (I) sont prévus afin que la pression à la sortie de la zone intermédiaire (I), qui est la même que celle à l'entrée du four de cuisson (C), soit égale ou supérieure à la pression à l'entrée de la zone intermédiaire (I), qui est la même que celle à la sortie du four de séchage (S), le four de séchage (S) est muni de moyens (5) de recyclage partiel ou total de l'air et de réchauffage de l'air recyclé.

2. Installation selon la revendication 1, caractérisé en ce que les moyens (5) de recyclage et de réchauffage de l'air comprennent un canal d'aspiration (11) transversal au four, ouvert vers le bas, relié à un ventilateur (7) dont la conduite de refoulement comporte un moyen de chauffage (10)) tel qu'un brûleur et débouche dans une rampe parallèle au canal d'aspiration, rampe munie de buses (12) de mise en vitesse.

3. Installation selon l'une quelconque des revendications précédentes, caractérisée en ce que l'avance des wagons dans l'ensemble four de séchage four de cuisson est une avance pas à pas, le pas étant égal ou sous-multiple entier de la longueur d'un wagon, les produits sont placés dans des supports (2) (ou gazettes) positionnés en piles équidistantes, avec un entre-axe égal ou sous-multiple de la longueur d'un wagon, et les moyens de recyclage d'air avec réchauffage sont répartis de façon telle que l'aspiration et le refoulement se trouvent, à chaque arrêt, situés l'un et l'autre au droit d'un espace séparent deux piles (2) de gazettes, espace dont la longueur est de quelconques décimètres.

4. Installation selon l'une quelconque des revendications précédentes, caractérisée en ce que la longueur de l'enceinte intermédiaire (I) est de l'ordre de grandeur de la longueur d'un wagon (1).

5. Installation selon l'une quelconque des revendications précédentes, caractérisée en ce que les produits sont empilés sans contact entre eux sur les wagons au moyen de supports (ou gazettes) céramiques comportant une sole (3) perforée assurant l'appui des produits, ladite sole pouvant être munie de reliefs de calage pour éviter les déformations, et des flancs latéraux (4) perpendiculaires à ladite sole (3).

6. Installation selon l'une quelconque des revendications précédentes, caractérisée en ce que la porte de sorte (P2) du four de cuisson (C) est une porte double en forme de sas, la distance entre les deux portes du sas étant supérieure à la longueur d'un wagon.

## Patentansprüche

1. Trocknungs- und Brenneinrichtung für keramische Produkte, des Typs mit einem Tunneldurchlaufofen, die einen Trocknungsofen (S) mit einem Eingangstor (P1) sowie einen Brennofen (C) mit einem Auslaßtor (P2) umfaßt und in der die mit Produkten zum Trocknen und Brennen beladenen Wagen im Gegenstrom zu einem Trocknungsluft- und/oder Brennluft-Umlauf verfahren werden, wobei diese Wagen an ihrer Grundplatte mit einer Umfangsschürze versehen sind, die dazu vorgesehen ist, über ihren ganzen äußeren Umfang in tieferliegende wassergefüllte Gräben des Trocknungs- (S) und des Brennofens (C) einzutauchen, dadurch gekennzeichnet,

daß der Trocknungsofen (S) und der Brennofen (C) voneinander durch eine dichte Zwischenzone (I) getrennt sind, die einen tieferliegenden Graben aufweist, der mit den tieferliegenden Gräben des Trocknungs- (S) und des Brennofens (C) einen durchgehenden Graben (22) ausbildet,

die Trocknungsluft über Einblasmittel (16) am Auslaß des Trocknungsofens (S), der gleichzeitig den Einlaß der Zwischenzone (I) bildet, eingeblasen und über einen Kamin (17) am Einlaß des Trocknungsofens (S) abgezogen wird, während die Brennluft am Ausgang des Brennofens (C) über Einblasmittel (13) eingeblasen und teilweise über einen Kamin (15) am Eingang des Brennofens (C), der gleichzeitig auch den Ausgang der Zwischenzone (I) darstellt, abgezogen wird,

Steuer- (18, 19) und Regeleinrichtungen für den Druck in der Zwischenzone (I) vorgesehen sind, damit der Druck am Ausgang der Zwischenzone (I), welcher derselbe wie der am Eingang des Brennofens (C) ist, gleich oder größer als der Druck am Eingang der Zwischenzone (I) ist, welcher derselbe wie der am Ausgang des Trocknungsofens (S) ist,

und daß der Trocknungsofen (S) mit Einrichtungen (5) zur teilweisen oder ganzen Rückführung der Luft und zur Erwärmung der rückgeführten Luft versehen ist.

2. Einrichtung nach Anspruch 1, dadurch gekennzeichnet, daß die Einrichtungen (5) zur Rückführung und Erwärmung der Luft einen zum Ofen querliegenden Ansaugkanal (6) umfassen, der nach unten offen und an einen Ventilator (7) angeschlossen ist, dessen Rückförderlietung eine Heizeinrichtung (10), wie etwa einen Brenner, aufweist und in eine zum Ansaugkanal parallele Leitung mündet, die mit Beschleunigerdüsen (12) bestückt ist.

3. Einrichtung nach einem der vorangehenden Ansprüche, dadurch gekennzeichnet, daß der Transport der Wagen in der Gesamtheit Trocknungsofen/Brennofen in Schritten erfolgt, wobei ein Schritt gleich einer Wagenlänge oder einer ganzzahligen Unterteilung derselben ist, die Produkte auf Stützen (2) (oder in Kästen) liegen, die in Stapeln mit gleichen Abständen angeordnet sind, wobei ein Abstand gleich einer Wagenlänge oder einer ganzzahligen Unterteilung derselben ist, und daß die Einrichtungen zur Rückführung der Luft mit Erwärmung derart angeordnet sind, daß sowohl die Ansaugung wie auch die Rückführung bei jedem Halt rechtwinklig zu einem Zwischenraum zu liegen kommen, der zwei Stapel (2) von Kästen trennt und dessen Länge einige Dezimeter beträgt.

4. Einrichtung nach einem der vorangegangenen Ansprüche, dadurch gekennzeichnet, daß die Länge des Zwischenraumes (I) in der Größenordnung einer Wagenlänge (1) liegt.

5. Einrichtung nach einem der vorangegangenen Ansprüche, dadurch gekennzeichnet, daß die Produkte ohne gegenseitigen Kontakt auf den Wagen mittels keramischer Stützen (oder Kästen) aufgestapelt sind, die einen mit Löchern versehenen Tragsteg (3) zur Abstützung der Produkte, der seinerseits mit einem Stützrelief zur Vermeidung von Deformationen versehen sein kann, sowie rechtwinklig am Tragsteg (3) angeordnete Seitenflanken (4) aufweisen.

6. Einrichtung nach einem der vorangegangenen Ansprüche, dadurch gekennzeichnet, daß das Auslaßtor (P2) des Brennofens (C) ein Doppeltor in Form einer Schleuse ist, bei dem der Abstand zwischen den beiden Schleusentoren größer als eine Wagenlänge ist.

**Claims**

1. Drying and burning installation for ceramic products, of the continuous tunnel furnace type, comprising a drying furnace (S) provided with an entrance door (P1) and a burning furnace (C) provided with an exit door (P2), in which carriages loaded with products to be dried and burned move counter to a circulation of drying and/or burning air, the bases of the said carriages being provided with a peripheral skirt adapted to be immersed over its entre perimeter in the water contained in the bottom pits of the drying furnace (S) and of the burning furnace (C), characterised in that the drying furnace (S) and the burning furnace (C) are separated from one another by means of an airtight intermediate zone (I), the intermediate zone (I) having a bottom pit forming a continuous pit (22) with the bottom pits of the drying furnace (S) and of the burning furnace (C), the drying air is blown in by supply means (16) at the exit of the drying furnace (S), which is also the entrance to the intermediate zone (I), and evacuated by a chimney (17) at the entrance to the said drying furnace (S), while the burning air is blown in at the exit of the burning furnace (C) by supply means (13) and is partially evacuated by a chimney (15) situated at the entrance to the burning furnace (C), which is also the exit of the intermediate zone (I), means (18, 19) for controlling and regulating the pressure in the intermediate zone (I) are provided so that the pressure at the exit of the intermediate zone (I), which is equal to the pressure at the entrance to the burning furnace (C), is equal to or higher than the pressure at the entrance to the intermediate zone (I), which is equal to the pressure at the exit of the drying furnace (S), and the drying furnace (S) is provided with means (5) for partial or complete recycling of the air and for heating of the recycled air.

2. Installation according to Claim 1, characterised in that the means (5) for recycling and heating the air comprise a suction channel (11) disposed transversely to the furnace, open towards the bottom and connected to a ventilator (7), the discharge duct of which comprises heating means (10) such as a burner and opens into a rail parallel to the suction channel, said rail being provided with acceleration nozzles (12).

3. Installation according to any one of the preceding claims, characterised in that the carriages are advanced into the drying furnace/burning furnace assembly in a stepwise manner, each step being equal to or a submultiple of the length of one carriage, the products are placed in supports (2) (or saggers) positioned in equidistance stacks, the distance between the axes being equal to or a submultiple of the length of one carriage, and the means for the recycling and associated heating of the air are distributed in such a way that at each stop the suction and discharge are each situated opposite a space separating two stacks (2) of saggers, these spaces being several decimetres in length.

4. Installation according to any one of the preceding claims, characterised in that the length of the intermediate enclosure (I) is approximately the length of one carriage (1).

5. Installation according to any one of the preceding claims, characterised in that the products are stacked without contact between one another on the carriages by means of ceramic supports (or saggers) comprising a perforated base (3) supporting the products, wherein said base can be provided with wedging reliefs to prevent distortion, and side walls (4) perpendicular to the said base (3).

6. Installation according to any one of the preceding claims, characterised in that the exit door (P2) of the burning furnace (C) is a double door forming a lock chamber, the distance between the two doors of the lock chamber being greater than the length of one carriage.

Fig.1

Fig.2

Fig.3

EP 0 208 620 B1

Fig.4

Fig.5

Fig.7

Fig.6